(19) Europäisches Patentamt / European Patent Office / Office européen des brevets

(11) EP 1 981 287 A2

(12) **EUROPEAN PATENT APPLICATION**

(43) Date of publication:
**15.10.2008 Bulletin 2008/42**

(51) Int Cl.:
**H04N 9/64** (2006.01)

(21) Application number: **07123871.1**

(22) Date of filing: **20.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **12.04.2007 KR 20070036176**

(71) Applicant: **Samsung Electronics Co., Ltd.**
**Suwon-si, Gyeonggi-do 442-742 (KR)**

(72) Inventors:
• **Lee, Chang-woo**
  **Gyeonggi-do (KR)**
• **Kim, Moon-cheol**
  **Seoul (KR)**
• **Shin, Yoon-Cheol**
  **Seoul (KR)**

(74) Representative: **Davies, Robert Ean**
  **Appleyard Lees**
  **15 Clare Road**
  **Halifax HX1 2HY (GB)**

(54) **Apparatus and method for generating wide colour gamut signal in image capturing device**

(57) Provided are a method and apparatus for generating a wide color gamut signal in an image capturing device, which can simplify a calculation process and minimize color distortion therein. The apparatus includes a gamma-correction unit (220) gamma-correcting a picked-up image signal by using gamma curve information predetermined according to an output format; an interpolation unit (230) interpolating the gamma-corrected image signal as a linear image signal which is to be expressed on a display; a color gamut conversion unit (240) converting the interpolated image signal into a standard RGB signal by using a color conversion matrix; a color expansion unit (250) expanding the standard RGB signal to a wide color gamut signal by using a gamut conversion matrix; and a signal correction unit (260) correcting the wide color gamut signal by a predetermined correction gain value.

FIG. 2

EP 1 981 287 A2

**Description**

Apparatuses and methods consistent with the present invention relate to image capturing, and more particularly, to generating a wide color gamut signal, which can simplify a calculation process and minimize color distortion therein. Generally, image capturing devices are devices such as camcorders and cameras. Color signals having BT.601 components or YCbCr components have about 1/3 of a color reproduction rate of a color gamut which humans can recognize. As image capturing devices have improved, multi-media output devices have become able to capture signals in a wider color gamut than a conventional YCbCr gamut.

When an image signal is input to an image capturing device through an image pick-up device such as a charge-coupled device (CCD) or a complementary metal oxide semiconductor (CMOS) sensor, the image capturing device converts the input image signal by performing a linear matrix conversion into an RGB color signal. At this time, signals outside the color gamut based on the sRGB/Rec. ITU-R BT.709 standard are generated. The color gamut is a range of colors, which is expressible when an image captured by the image capturing device is reproduced. Thus, the color gamut is determined according to a display standard of an image capturing device or a display device. Therefore, the signals outside the color gamut are signals outside the color gamut which is expressible during reproduction.

Conventional image capturing devices capture picked-up image information, convert the captured image information into a standard RGB signal by using a linear matrix, gamma-correct the standard RGB signal, convert the gamma-corrected standard RGB signal into a YCbCr signal, and convert the YCbCr signal into a wide color gamut signal called extended video YCbCr (xvYCC) by using an xvYCC matrix.

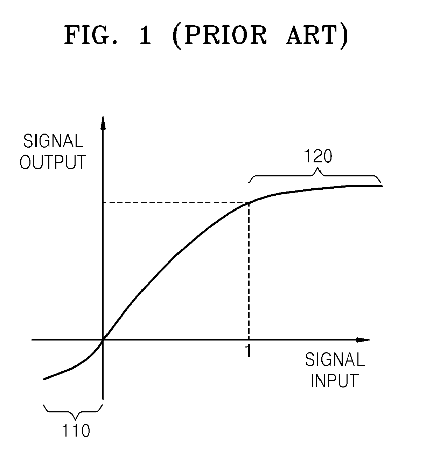

FIG. 1 illustrates characteristics of the standard RGB signal passed through the standard RGB matrix.

In general, the standard RGB signal includes signals having negative values and values exceeding "1".

Thus, the standard RGB signal passed through the standard RGB matrix can be represented as a signal area 110 having negative values and a signal area 120 having values exceeding "1", as shown in FIG. 1.

However, bit-depth increases because the standard RGB signal includes the signals having negative values and values exceeding "1". Thus, a gamma-correction unit requires more memory space in order to store the signals having negative values in a gamma-correction look-up table. Also, there is a problem in the prior art in that more interpolation processing operations are required due to the signals having negative values.

Embodiments of the present invention aim to provide a method and apparatus for generating a wide color gamut signal, which can reduce hardware resources and signal distortion when generating the wide color gamut signal in an image capturing device.

According to an aspect of the present invention, there is provided an apparatus for generating a wide color gamut signal in an image capturing device, the apparatus including a gamma-correction unit gamma-correcting a picked-up image signal by using gamma curve information predetermined according to an output format; an interpolation unit interpolating the gamma-corrected image signal as a linear image signal which is to be expressed on a display; a color gamut conversion unit converting the interpolated image signal into a standard RGB signal by using a color conversion matrix; a color expansion unit expanding the standard RGB signal to a wide color gamut signal by using a gamut conversion matrix; and a signal correction unit correcting the wide color gamut signal by a predetermined correction gain value.

According to another aspect of the present invention, there is provided a method of generating a wide color gamut signal in the image capturing device, the method including gamma-correcting a picked-up linear image signal by using a predetermined gamma curve according to an output format of the image capturing device; interpolating the gamma-corrected linear RGB signal to a linear RGB signal which is to be expressed on a output display; converting the interpolated linear RGB signal into a standard RGB signal by using a predetermined color conversion matrix; expanding the standard RGB signal to a wide color gamut signal by using a color domain conversion matrix; and correcting a gain of the wide color gamut signal by a correction gain value determined according to a predetermined gain set-up algorithm.

For a better understanding of the invention, and to show how embodiments of the same may be carried into effect, reference will now be made, by way of example, to the accompanying diagrammatic drawings in which:

FIG. 1 illustrates characteristics of a standard RGB signal passed through a standard RGB matrix;
FIG. 2 is a block diagram of an apparatus for generating a wide color gamut signal in an image capturing device according to an embodiment of the present invention;
FIG. 3A is a gamma curve according to the Rec. ITU-R BT.1361 standard;
FIG. 3B is a gamma curve according to the xvYCC standard;
FIG. 4 is an embodiment of a correction gain generating unit and a signal correction unit illustrated in FIG. 2;
FIGS. 5A through 5C are graphs showing embodiments of characteristics in order to obtain gains in the signal gain generating unit; and
FIG. 6 is a flowchart of a method of generating a wide color gamut signal in an image capturing device according to an embodiment of the present invention.

The attached drawings illustrate exemplary embodiments of the present invention, and are referred to in order to gain a sufficient understanding of the present invention and its merits and objectives.

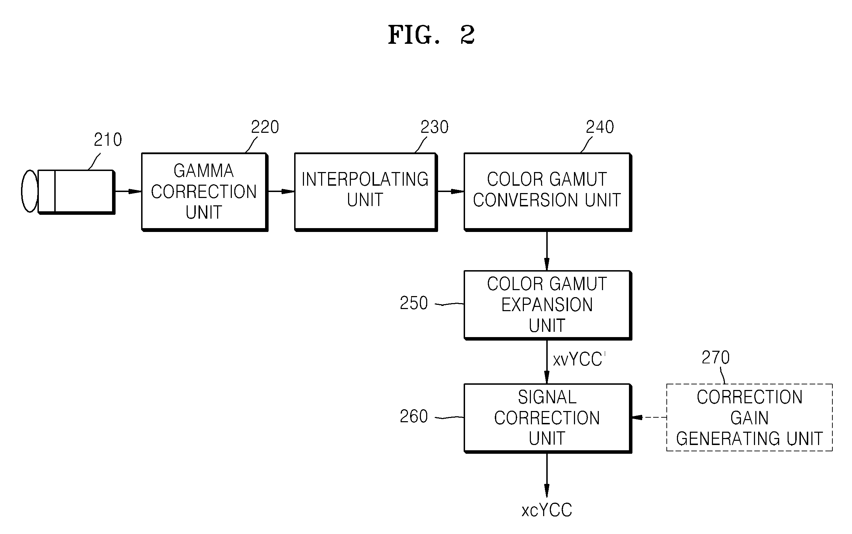

FIG. 2 is a block diagram of an apparatus for generating a wide color gamut signal in an image capturing device according to an embodiment of the present invention.

The apparatus includes an image pick-up unit 210, a gamma-correction unit 220, an interpolation unit 230, a color gamut conversion unit 240, a color gamut expansion unit 250 and a signal correction unit 260. Also, the image capturing device includes a correction gain generating unit 270 as an option.

The image pick-up unit 210 converts an image which is input by using a pick-up device, such as a charge-coupled device (CCD) or a complementary metal oxide semiconductor (CMOS) sensor, into an RGB signal having a linear characteristic.

The gamma-correction unit 220 receives the RGB signal having the linear characteristic from the image pick-up unit 210. When the RGB signal is received, the gamma-correction unit 220 gamma-corrects the linear RGB signal by using a gamma curve predetermined according to an output format of the image capturing device.

The gamma-correction unit 220 updates the gamma curve information whenever an output format of the image capturing device is changed.

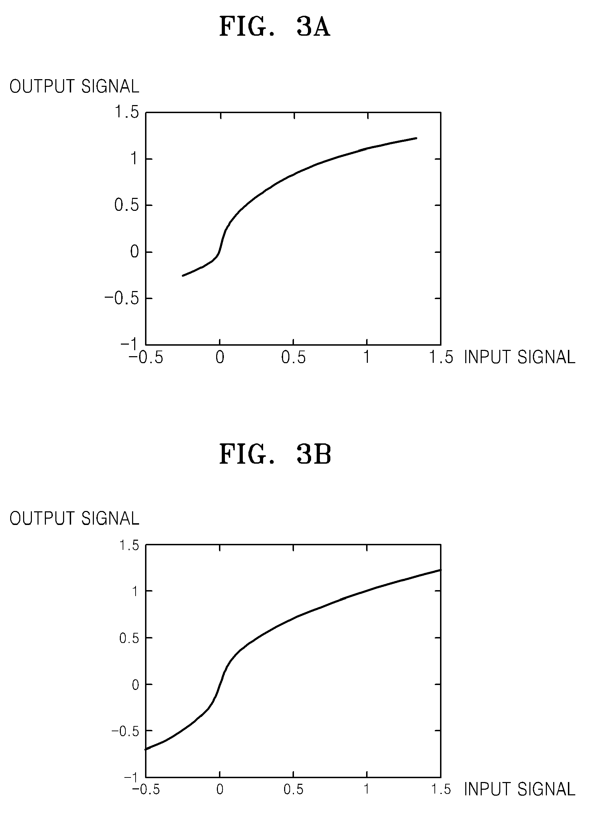

In other words, if the output format of the image capturing device is Rec. ITU-R BT.1361, the gamma-correction unit 220 gamma-corrects an RGB signal which is input based on the gamma curve shown in FIG. 3A. The gamma curve shown in FIG. 3A is based on the Rec. ITU-R BT.1361 standard. In FIG. 3A, an input signal is a linear RGB signal and an output signal is a gamma-corrected linear RGB signal. The gamma curve shown in FIG. 3A can be obtained according to the following equation:

$$
\begin{aligned}
E' &= 1.099 \times L^{0.45} - 0.099 && \text{for } 0.018 \le L < 1.33 \\
E' &= 4.50 \times L && \text{for } -0.0045 \le L < 0.018 \\
E' &= -\{1.099 \times (-4 \times L)^{0.45} - 0.099\}/4 && \text{for } -0.25 \le L < -0.0045
\end{aligned}
\qquad \dots (1),
$$

where L is a linear RGB signal input to the gamma-correction unit 220 and E' is a gamma-corrected linear RGB signal output from the gamma-correction unit 220.

For example, if the output format of the image capturing device is xvYCC, the gamma-correction unit 220 gamma-corrects a linear RGB signal which is input based on the gamma curve shown in FIG. 3B. The gamma curve shown in FIG. 3B is based on the xvYCC standard. An input signal in FIG. 3B is a linear RGB signal and an output signal is a gamma-corrected RGB signal. The gamma curve shown in FIG. 3B can be obtained according to the following equation:

$$
\begin{aligned}
E' &= 1.099 \times L^{0.45} - 0.099 && \text{for } 0.018 \le L \\
E' &= 4.50 \times L && \text{for } -0.018 \le L < 0.018 \\
E' &= -(1.099 \times (-L)^{0.45} - 0.099) && \text{for } L < -0.018
\end{aligned}
\qquad \dots (2)
$$

where L is a linear RGB signal input to the gamma-correction unit 220 and E' is a gamma-corrected linear RGB signal output from the gamma-correction unit 220.

Output formats other than the xvYCC or the Rec. ITU-R BT.1361 standards can be set up for the image capturing device. The output format is set up according to a display format of an apparatus in which an image captured by the image capturing device is to be reproduced.

Unlike a standard RGB signal, a picked-up image signal does not have a negative gain value or a gain value exceeding 1. Accordingly, the gamma-correction unit 220 uses the picked-up image signal instead of the conventional standard RGB signal having a negative gain value, so it does not require gamma-corrected data for a gain value which is a negative value or a value exceeding 1, and thereby reduces the data rate of a look-up table and interpolation operation.

The interpolation unit 230 interpolates the linear RGB signal gamma-corrected by the gamma-correction unit 220 to a linear RGB signal which is to be expressed on an output display by using an interpolation method such as a bilinear interpolation method. In other words, in order to make a signal format of an image pick-up device the same as a display format, the interpolation unit 230 interpolates a signal with a Bayer pattern or an RGB signal with a 3CCD pattern to an RGB signal in a display format. For example, the image pick-up unit 210 generally includes a color filter array (CFA) for obtaining a color image signal. The CFA is attached to the front end of a CCD in the form of a micro-lens, only allowing a light showing one color per pixel, and has a structure of a regular arrangement of a pattern. The CFA has various structures according to an arrangement of color elements; however, in general, it has a 2-G Bayer pattern. In the 2-G Bayer pattern of the CFA, G representing luminance is 50%, and R and B representing color elements are 25% distributed. In order to obtain an image signal having R, G, B channels per pixel, an output image of CCD employing CFA has to be interpolated using color information on surrounding pixels, since each pixel only has information on one color.

Also, the interpolation unit 230 can reduce an interpolating operation, because the interpolation unit 230 interpolates a picked-up image signal instead of a conventional standard RGB signal having a negative value.

The color gamut conversion unit 240 converts the interpolated linear RGB signal into a standard RGB signal by using a conversion matrix (for example, a 3 x 3 matrix algorithm). At this time, the standard RGB signal output from the color gamut conversion unit 240 includes a negative gain value and a gain value exceeding 1. In order to apply the interpolated linear RGB signal to a CIE-RGB color matching function, a conversion matrix, can be calculated by using least mean square filtering (LMSF), for example. The LMSF generates the least amount of statistical error.

The color gamut expansion unit 250 expands the standard RGB signal to the wide color gamut signal called extended video YCbCr (xvYCC') by using an xvYCC matrix or a color domain conversion matrix. The color domain conversion matrix is predetermined according to an output format of the image capturing device. For example, if the output format is xvYCC, the color domain conversion matrix is composed so as to convert a color domain of the standard RGB signal into a luminance or a color difference signal having an xvYCC color domain by using a predetermined matrix algorithm.

The signal correction unit 260 corrects the wide color gamut signal xvYCC' output from the color gamut expansion unit 250 by a correction gain value predetermined by test values to make it similar to a standard xvYCC signal. Thus, the signal correction unit 260 converts the wide color gamut signal xvYCC' output from the color gamut expansion unit 250 into a corrected wide color gamut signal xcYCC.

The correction gain generating unit 270 compares the wide color gamut signal xvYCC' expanded by the color gamut expansion unit 250 with a conventional wide color gamut signal $xvYCC_R$, and generates an optimal correction gain value. The correction gain generating unit 270 provides a gain value predetermined by a product manufacturer to the signal correction unit 260.

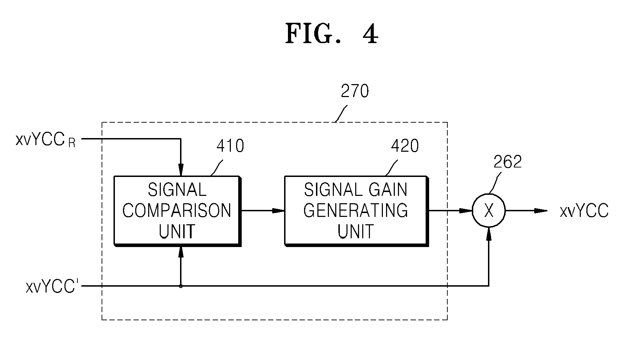

FIG. 4 is an embodiment of the correction gain generating unit 270 and the signal correction unit 260 illustrated in FIG. 3.

The correction gain generating unit 270 in FIG. 4 includes a signal comparison unit 410 and a signal gain generating unit 420, and the signal correction unit 260 includes a multiplying unit 262.

The signal comparison unit 410 compares an expanded wide color gamut signal xvYCC' with a conventional wide color gamut signal $xvYCC_R$ at a luminance (Y) and color (c) coordinates, and extracts a difference value of a pixel. Here, the conventional wide color gamut signal xvYCCR is a signal generated by the conventional image capturing device.

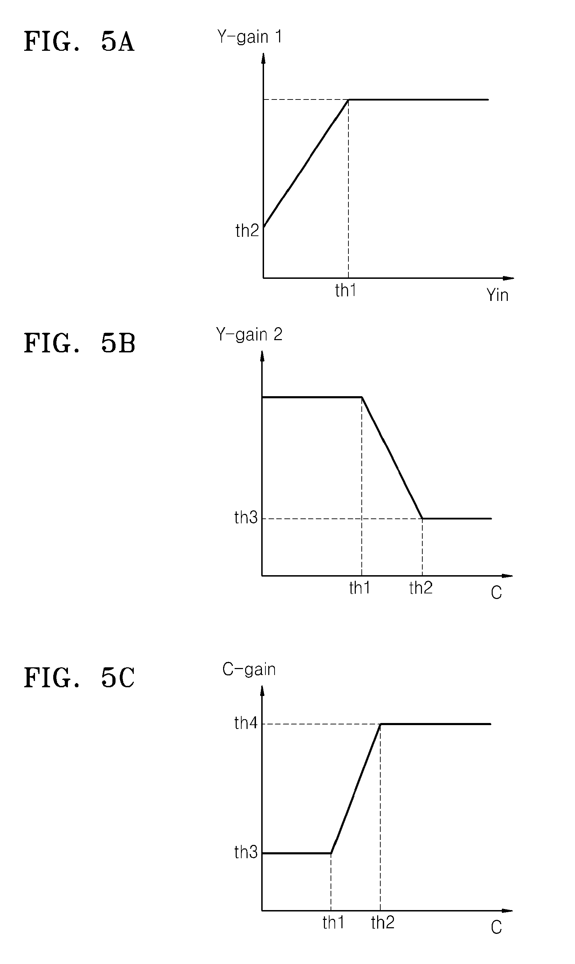

The signal gain generating unit 420 matches the difference value of the pixel extracted by the signal comparison unit 410 at the luminance (Y) and the color (c) coordinates, and calculates a gain value of the luminance and the color signal (Y, C) in which the wide color gamut signal xvYCC' is adjacent to the conventional wide color gamut signal $xvYCC_R$. The gain value of the signal can be obtained with reference to graphs in FIGS. 5A through 5C illustrating characteristics of a gain.

Referring to FIG. 5A, an output luminance gain value Y_gain1 for an input luminance signal Yin can be obtained by setting up two threshold values th1 and th2.

Referring to FIG. 5B, an output luminance gain value Y_gain2 for an input color signal C can be obtained by setting up three threshold values th1, th2, and th3.

Referring to FIG. 5C, an output color gain value C_gain for an input color signal C can be obtained by setting up four threshold values th1, th2, th3, and th4.

Referring back to FIG. 4, the multiplying unit 262 multiplies the wide color gamut signal xvYCC' output from the color gamut expansion unit 250 by the gain values of the signal generated from the signal gain generating unit 420, and generates a corrected wide color gamut signal xvYCC.

Here, an output luminance signal and an output color signal Y_out and C_out for forming a wide color gamut in the multiplying unit 262 can be described as given by Equation (3), using characteristics of gains illustrated in FIGS. 5A through 5C.

$$Y\_out = Y\_gain1 * Y\_gain2 * Y\_in$$

$$C\_out = C\_gain1 * C$$

$$C = \mathrm{SQRT}\{Cb^2 + Cr^2\} \qquad \dots (3)$$

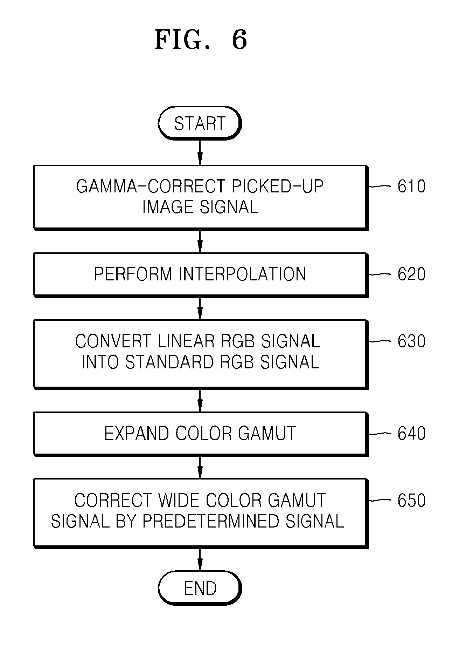

FIG. 6 is a flowchart of a method of generating a wide color gamut signal in an image capturing device according to an embodiment of the present invention.

First, gamma-correction for a linear RGB signal output by the pick-up device is performed using a gamma curve predetermined according to an output format of the image capturing device (operation 610).

Then, the gamma-corrected linear RGB signal with a Bayer pattern is interpolated to a linear RGB signal, which is to be expressed on an output display, by using a linear interpolation method (operation 620).

Next, the interpolated linear RGB signal is converted into a standard RGB signal by using a color domain conversion matrix (operation 630).

Next, the standard RGB signal is expanded to a wide color gamut signal xvYCC by using the xvYCC matrix or the color domain conversion matrix (operation 640).

Next, the wide color gamut signal xvYCC is corrected by a correction gain value determined by a gain set up algorithm (operation 650). Here, the gain set up algorithm compares the expanded wide color gamut signal with a conventional wide color gamut signal through color coordinates, extracts a difference value, and generates a correction signal gain in which the wide color gamut signal is adjacent to the conventional wide color gamut signal by matching the extracted difference value. Therefore, an error between the xvYCC signal passing the xvYCC matrix and the conventional xvYCC signal can be compensated by analyzing the difference between the two signals.

The invention can also be embodied as computer readable information on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion.

As described above, according to an embodiment of the present invention, an xvYCC signal has a wider color space than a conventional RGB signal. When comparing a color gamut with reference to a Munsell color cascade which is a color sample series, a color gamut of sRGB signal supports 55% in the Munsell color cascade whereas the xvYVV signal supports 100%. According to the present invention, it is possible to reduce the data rate of a look-up table for a gamma-correction and interpolation operation by performing a gamma correction algorithm and interpolation algorithm on a picked-up image signal and generating an xvYCC. Also, a matching error between the xvYCC signal passing the xvYCC matrix and an actual xvYCC signal can be minimized by compensating the error between the two signals.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s).

The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for generating a wide color gamut signal in an image capturing device, the apparatus comprising;
a gamma-correction unit (220) which gamma-corrects a picked-up image signal by using gamma curve information predetermined according to an output format;
an interpolation unit (230) which interpolates the gamma-corrected image signal as a linear image signal which is to be expressed on a display;
a color gamut conversion (240) unit which converts the interpolated image signal into a standard RGB signal by using a color conversion matrix;
a color expansion unit (250) which expands the standard RGB signal to an expanded wide color gamut signal by using a gamut conversion matrix; and
a signal correction unit (260) which corrects the wide color gamut signal by a predetermined correction gain value.

2. The apparatus of claim 1, further comprising a correction gain generating unit (270) which generates the correction gain value by comparing the expanded wide color gamut signal with a conventional wide color gamut signal.

3. The apparatus of claim 2, wherein the correction gain generating unit (270) comprises:

   a signal comparison unit (410) which compares the expanded wide color gamut signal with the conventional wide color gamut signal and extracts a difference value; and
   a signal gain generating unit (420) which generates a correction signal gain in which the expanded wide color gamut signal is adjacent to the conventional wide color gamut signal, by matching the extracted difference value.

4. The apparatus of any preceding claim, wherein the gamma-correction unit (220) updates the gamma curve information whenever an output format of the image capturing device is changed.

5. The apparatus of any preceding claim, wherein the signal correction unit (260) is a multiplication unit which multiplies a gain of the expanded wide color gamut signal by a predetermined correction gain value.

6. A method of generating a wide color gamut signal in the image capturing device, the method comprising:

   gamma-correcting (610) a picked-up linear image signal by using a predetermined gamma curve according to an output format of the image capturing device;
   interpolating (620) the gamma-corrected linear RGB signal to a linear RGB signal which is to be expressed on an output display;
   converting (630) the interpolated linear RGB signal into a standard RGB signal by using a predetermined color conversion matrix;
   expanding (640) the standard RGB signal to an expanded wide color gamut signal by using a color domain conversion matrix; and
   correcting (650) a gain of the expanded wide color gamut signal by a correction gain value determined according to a predetermined gain set-up algorithm.

7. The method of claim 6, wherein the interpolating comprises interpolating to a color image signal having R, G, B channel information in a current pixel by using color information of surrounding pixels.

8. The method of claim 6 or 7, wherein the predetermined gain set-up algorithm extracts a difference value by comparing the expanded wide color gamut signal with a conventional wide color gamut signal by using color coordinates; and generates a correction gain value by matching the extracted difference value.

9. The method of any of claims 6-8, wherein the correction gain value is a value in which a gain of the expanded wide color gamut signal is adjusted close to a gain of the conventional wide color gamut signal.

10. A computer readable recording medium having recorded thereon computer code for executing a wide color gamut signal generating method in an image capturing device, the method comprising:

gamma-correcting (610) a picked-up image signal by using gamma curve information predetermined according to an output format;

interpolating (620) the gamma-corrected image signal as a linear image signal which is to be expressed on a display;

converting (630) the interpolated image signal into a standard RGB signal by using a color conversion matrix;

expanding (640) the standard RGB signal to a wide color gamut signal by using a gamut conversion matrix; and

correcting (650) the wide color gamut signal by a predetermined correction gain value.

## FIG. 1 (PRIOR ART)

# FIG. 2

GAMMA CORRECTION UNIT (220) → INTERPOLATING UNIT (230) → COLOR GAMUT CONVERSION UNIT (240) → COLOR GAMUT EXPANSION UNIT (250) → SIGNAL CORRECTION UNIT (260) → xcYCC

CORRECTION GAIN GENERATING UNIT (270)

xvYCC'

EP 1 981 287 A2

# FIG. 3A

OUTPUT SIGNAL

# FIG. 3B

OUTPUT SIGNAL

FIG. 4

270

xvYCC$_R$

410

420

262

SIGNAL
COMPARISON
UNIT

SIGNAL GAIN
GENERATING
UNIT

X → xvYCC

xvYCC'

FIG. 5A

FIG. 5B

FIG. 5C

# FIG. 6

START

GAMMA-CORRECT PICKED-UP IMAGE SIGNAL — 610

PERFORM INTERPOLATION — 620

CONVERT LINEAR RGB SIGNAL INTO STANDARD RGB SIGNAL — 630

EXPAND COLOR GAMUT — 640

CORRECT WIDE COLOR GAMUT SIGNAL BY PREDETERMINED SIGNAL — 650

END